# EUROPÄISCHE PATENTANMELDUNG

(11) **EP 1 344 449 A2**
(43) Veröffentlichungstag der Anmeldung: **17.09.2003**
(21) Anmeldenummer: 03004634.6
(22) Anmeldetag: 03.03.2003
(51) Int. Cl.: A01K 1/00

(54) **Stallgebäude für die Nutztierhaltung mit durch Trennwand getrennten Kammern**

(30) Priorität: 13.03.2002 DE 20204021 U
(71) Anmelder: Hermes Stalleinrichtungen GmbH, 09557 Flöha (DE)
(72) Erfinder: Seidel, Thomas, Dipl.-Ing., 09573 Augustusburg (DE)
(74) Vertreter: Körtel, Günther H., Dr.-Ing. Pat.-Ing.

(57) **Zusammenfassung**

Die Erfindung betrifft ein Stallgebäude für die Nutztierhaltung mit höhenversetztem Satteldach, bestehend aus einer Mehrzahl von modulartig an stirnseitigen Wänden (3) aneinander gereihten Stalleinheiten aus je zwei Kammern (8,9), wobei die Kammern jeweils den unterschiedlich geneigten Dachabschnitten (4,5) zugeordnet sind und jeweils eine parallel zum Dachfirst verlaufende Trennwand (10) besitzen, die einen durch einen Vorhang (13) verschließbaren Durchgang aufweist.

Aufgabe ist es, ein Stallgebäude der eingangs genannten Art dahingehend weiter zu verbessern, daß die niedrigere Kammer von der Gangseite aus besser für Kontrolle, Wartung, Reinigung, Lüftung und dgl. zugänglich ist.

Erfindungsgemäß wird diese Aufgabe dadurch gelöst, daß die Trennwand zwecks Öffnung vertikal beweg- und feststellbar ausgeführt ist und an ihrem unteren Ende einen Lamellenvorhang aufweist, dessen senkrecht orientierte Lamellen (13.1) jeweils quer zu und/oder seitlich in der Ebene der Trennwand ablenkbar sind.

## Beschreibung

Die Erfindung betrifft ein Stallgebäude für die Nutztierhaltung mit höhenversetztem Satteldach, bestehend aus einer Mehrzahl von modulartig an stirnseitigen Wänden aneinander gereihten Stalleinheiten aus je zwei Kammern, wobei die Kammern jeweils den unterschiedlich geneigten Dachabschnitten zugeordnet sind und jeweils eine parallel zum Dachfirst verlaufende Trennwand besitzen, die einen durch einen Vorhang verschließbaren Durchgang aufweist.

Derartige Stallgebäude sind insbesondere in der Schweine-, Kälber-, Schafe-, Ziegen- und Kaninchenhaltung flexibel einsetzbar und ermöglichen hohe Tierleistungen bei günstigem Investitionsbedarf und maximaler Energieeinsparung.

Aus DE 100 23 225 C1 ist ein gattungsgemäßes Stallgebäude bekannt. Dabei bestimmen die beiden Kammern je Stalleinheit zwei unterschiedliche Klimabereiche, welche den jeweiligen konkreten klimatischen Anforderungen der Tiere angepaßt sind. Dadurch werden die (den Kammern zugeordneten) Aktivitäts- und Ruhezonen der Tiere hinsichtlich der klimatischen Bedingungen optimiert, was sich äußerst positiv auf deren Sozialverhalten sowie auf Futterverwertung, Gesundheit und Wohlbefinden der Tiere und damit auf den Ertrag auswirkt.

Die beiden Kammern sind durch eine stabile und stationäre Trennwand getrennt. Ein in der Trennwand vorgesehener Durchgang ermöglicht das Durchgehen der Tiere zwecks Wechsels von einer in die andere Kammer. Der Durchgang kann durch einen Vorhang verschließbar sein. Diese Anordnung gestattet gemeinsam mit zweckmäßig angeordneten Be- und Entlüftungsöffnungen eine freie Belüftung durch natürliche Luftströme, so daß eine tierartgerechte Klimatisierung mit zwei den Kammern je Stalleinheit zugeordneten Klimabereichen gewährleistet ist.

Im praktischen Einsatz hat sich dieses Stallgebäude bewährt. Allerdings zeigte sich, daß die jeweils niedrigere Kammer, die als Ruhezone der Tiere bestimmt ist und die demgemäß eine höhere Raumtemperatur aufweist, von der Gangseite aus relativ schlecht einsehbar bzw. kontrollierbar ist, wobei der Gang i. d. R. längs der höheren und als Aktivitätszone der Tiere vorgesehenen Kammer verläuft. Insbesondere könnten sich bestimmte, z. B. kranke Tiere dadurch einer regelmäßigen Kontrolle zumindest zeitweise entziehen. Der notwendige Wechsel des Streumaterials und die Reinigung der niedrigeren Kammer ist von der Gangseite aus nur schwierig ausführbar. Auch ist ein gründliches Lüften der niedrigeren Kammer von der Gangseite aus zeitweise notwendig, jedoch bei der bekannten Ausführung kaum möglich.

In Anbetracht der Nachteile des bekannten Standes der Technik liegt der Erfindung die Aufgabe zugrunde, ein Stallgebäude der eingangs genannten Art dahingehend weiter zu verbessern, daß die niedrigere Kammer von der Gangseite aus besser für Kontrolle, Wartung, Reinigung, Lüftung und dgl. zugänglich ist.

Erfindungsgemäß wird diese Aufgabe dadurch gelöst, daß die Trennwand zwecks Öffnung vertikal beweg- und feststellbar ausgeführt ist und an ihrem unteren Ende einen Lamellenvorhang aufweist, dessen senkrecht orientierte Lamellen jeweils quer zu und/oder seitlich in der Ebene der Trennwand ablenkbar sind.

Durch diese erfindungsgemäße Gestaltung eines aus zwei durch Trennwand getrennten Kammern je Stalleinheit bestehenden, modular zusammengesetzten Stallgebäudes ist eine weitere Verbesserung der Nutzungsbedingungen möglich. Einerseits wird in der Schließ-, d. h. der Normalstellung der vertikal bewegbaren Trennwand, ein gutes Stallklima durch Bereitstellung von zwei den Kammern (Ruhe- bzw. Aktivitätsbereich) zugeordneten, getrennten Klimabereichen gewährleistet. Andererseits ist nun in der Offenstellung der vertikal bewegbaren Trennwand die niedrigere Kammer von der Gangseite aus besser für Kontrolle, Wartung, Reinigung, Lüftung u. dgl. zugänglich, so daß die genannten Nachteile vermieden werden. Darüber hinaus kann die Trennwand auch in Zwischenstellungen fixiert werden, um beispielsweise bei extrem hohen Außentemperaturen die Belüftung der Stalleinheiten weiter zu verbessern.

Der am unteren Ende der vertikal bewegbaren Trennwand vorgesehene Lamellenvorhang gewährleistet in der Schließstellung der Trennwand den freien Wechsel der Tiere zwischen den Kammern bei gleichzeitiger klimatischer Trennung beider Kammern, da die Lamellen sich etwa den Körperumrissen der Tiere anpassen und demgemäß eine ausreichende Dichtwirkung ermöglichen.

In vorteilhafter Ausgestaltung der Erfindung ist in einer ersten Variante die Trennwand als auf eine waagerechte Wickelrolle aufwickelbarer Vorhang aus flexiblem Material ausgeführt, an dessen unterem Ende der Lamellenvorhang angeordnet ist. In einer zweiten Variante ist die Trennwand als auf eine waagerechte Wickelrolle aufwickelbarer, aus einzelnen starren und gegeneinander verschwenkbaren Elementen bestehender Roll- oder Sektionalvorhang ausgeführt, an dessen unterem Ende der Lamellenvorhang angeordnet ist. In einer dritten Variante ist die Trennwand als aus einzelnen Elementen bestehende Jalousie ausgeführt, an deren unterem Ende der Lamellenvorhang angeordnet ist.

Diesen Varianten ist gemeinsam, daß die Trennwand jeweils seitlich in Führungsschienen geführt sein kann. Dadurch ist eine Verbesserung der Dichtwirkung erreichbar.

In einer weiteren Variante ist die Trennwand um eine waagerechte Achse insgesamt nach oben kipp- und feststellbar ausgeführt.

In weiterer zweckmäßiger Ausgestaltung besteht der Lamellenvorhang aus einzelnen flexiblen, als Streifen ausgeführten Lamellen, welche jeweils am unteren Ende der Trennwand befestigt sind. Dabei ist es aus Dichtungsgründen besonders günstig, daß die als Streifen ausgeführten Lamellen sich seitlich überdecken.

In einer Variante kann der Lamellenvorhang aus einzelnen, als mehr oder weniger starre Platten ausgeführten Lamellen bestehen, welche jeweils am unteren Ende der Trennwand um eine waagerechte Achse verschwenkbar befestigt sind.

Zweckmäßigerweise sind am unteren Ende der Lamellen Verbißschutzelemente angeordnet, um eine Beschädigung der Lamellen durch Tierverbiß zu vermeiden. In günstiger Ausführung bestehen diese Verbißschutzelemente aus Metall, wobei die Lamellen durch den Gewichtseinfluß vorzugsweise senkrecht orientiert werden.

In weiterer vorteilhafter Ausgestaltung ist oberhalb des oberen Endes der Trennwand bzw. oberhalb der Wickelrolle (bei Varianten mit aufwickelbarer Trennwand) eine die beiden Kammern verbindende Entlüftungsöffnung vorgesehen. Dadurch wird die Fortluftführung aus der niedrigeren Kammer bei geschlossener Trennwand gewährleistet.

Zweckmäßig ist die Trennwand aus der Schließ- in die Offenstellung und zurück und in Zwischenstellungen durch einen Antrieb bewegbar, der manuell- oder motorbetätigbar ist. Die Steuerung des Antriebs kann manuell oder automatisch erfolgen.

Die Erfindung wird nachstehend an einem Ausführungsbeispiel in mehreren Varianten näher erläutert. In der zugehörigen Zeichnung zeigen:
- Fig. 1: den Querschnitt durch das Stallgebäude in schematischer Darstellung,
- Fig. 2: die Ansicht in Richtung des Pfeils "A" in Fig. 1 auf eine Ausführungsvariante einer Trennwand mit verschiedenen Varianten des Lamellenvorhangs (veränderter Maßstab),
- Fig. 3: den Schnitt nach Linie III - III in Fig. 2 in verändertem Maßstab.

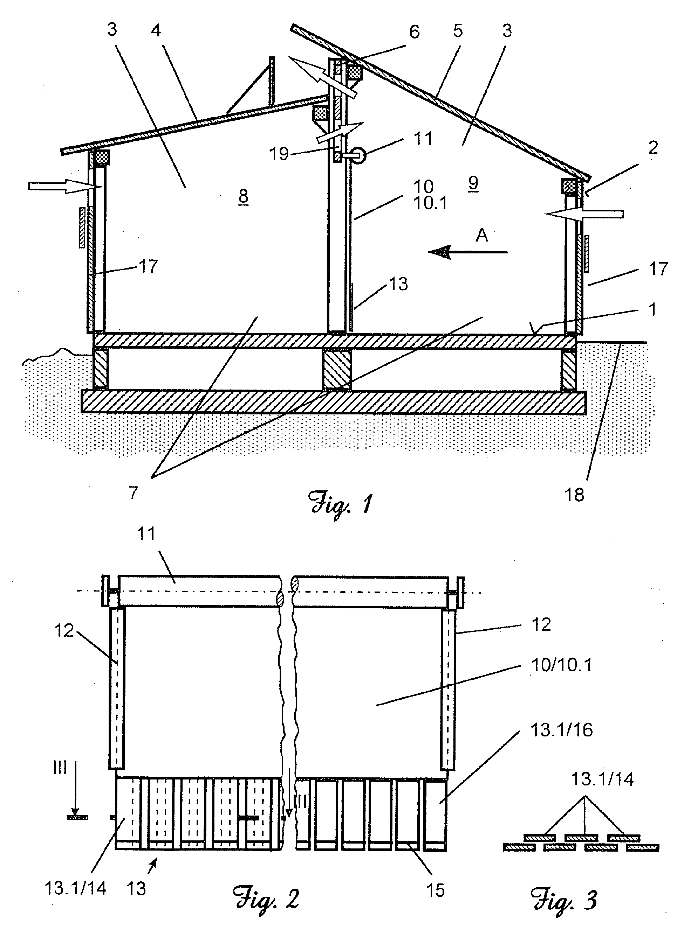

Das Stallgebäude (Fig. 1) besitzt eine Grundfläche 1, seitliche Wände 2, stirnseitige Wände 3 und ein höhenversetztes Satteldach mit nach außen geneigten Dachabschnitten 4, 5 unterschiedlicher Höhe. Der firstseitige Höhenunterschied ist durch eine Firstversatzwand 6 zumindest teilweise verschlossen.

Dieses Stallgebäude besteht aus einer Mehrzahl von modulartig an den stirnseitigen Wänden 3 aneinander gereihten Stalleinheiten 7, wobei zweckmäßigerweise benachbarte Stalleinheiten 7 gemeinsame stirnseitige Wände 3 besitzen.

Jede Stalleinheit 7 besteht aus den einander gegenüber befindlichen Kammern 8 und 9. Dabei sind die Kammern 8, 9 den unterschiedlich geneigten Dachabschnitten 4, 5 derart zugeordnet, daß eine niedrigere Kammer 8 und eine höhere Kammer 9 gebildet sind. Die niedrigere Kammer 8 dient als Ruhebereich der Tiere, während die höhere Kammer 9 als Aktivitätsbereich (z. B. Freßbereich) dient.

Die Kammern 8, 9 jeder Stalleinheit 7 sind durch eine parallel zur Firstversatzwand 6 verlaufende Trennwand 10 von einander trennbar. Dabei ist die Trennwand 10 zwecks Öffnung nach oben bewegbar und in dieser Position (sowie in beliebigen Zwischenpositionen) feststellbar. In der Ausführungsvariante gemäß Fig. 1 und 2 besteht die Trennwand 10 aus einem Vorhang 10.1 aus einem flexiblen Werkstoff, der auf eine im oberen Bereich der Stalleinheit 7 zwischen beiden Kammern 8, 9 waagerecht gelagerte Wickelrolle 11 auf- und von dieser abgewickelt werden kann. Seitliche Führungsschienen 12 dienen der exakten Führung des Vorhangs 10.1 während des Bewegungsvorgangs sowie der zweckmäßigen Abdichtung.

In einer nicht dargestellten zweiten Ausführungsvariante besteht die Trennwand 10 aus einem auf die Wickelrolle 11 auf-/ abwickelbaren Roll- oder Sektionalvorhang, der aus einzelnen, weitgehend starren und gegeneinander verschwenkbaren Elementen besteht. In einer weiteren nicht gezeichneten Variante kann die Trennwand 10 auch aus einer Jalousie bestehen, deren Elemente beliebig anstellbar sind. Gemäß einer vierten Ausführungsvariante kann die Trennwand 10 um eine waagerechte Achse insgesamt nach oben gekippt und festgestellt werden (nicht gezeichnet).

Allen Ausführungsvarianten ist gemeinsam, daß am unteren Ende der Trennwand 10 ein Lamellenvorhang 13 vorgesehen ist. Dieser besteht in einer ersten Variante (s. Fig. 2 links) aus als Streifen 14 ausgeführten Lamellen 13.1 aus einem flexiblen Kunststoffwerkstoff, welche einzeln am unteren Ende der Trennwand 10 befestigt und in Ausgangsstellung senkrecht orientiert und jeweils quer zu und/oder seitlich in der Ebene der Trennwand 10 durch Tiere ablenkbar sind. Zweckmäßig sind an ihrem unteren Ende Verbißschutzelemente 15 aus Metall angebracht, welche die Streifen 14/ Lamellen 13.1 vor Tierverbiß schützen und infolge ihres Gewichts in senkrechter Stellung halten.

Die Streifen 14 überdecken sich seitlich (s. Fig. 3), um eine Dichtwirkung zu erzielen. Es versteht sich, daß die Höhe der Streifen 14 die (maximale) Höhe der in der Stalleinheit 7 untergebrachten Tiere übertreffen muß, um einen behinderungsfreien Wechsel der Tiere zwischen den Kammern 8, 9 bei geschlossener Trennwand 10 zu ermöglichen.

In einer zweiten Variante (s. Fig. 2 rechts) besteht der Lamellenvorhang 13 aus einzelnen, weniger flexiblen Platten 16 aus Blech oder Kunststoff. Diese sind jeweils am unteren Ende der Trennwand 10 um eine waagerechte Achse einzeln verschwenkbar befestigt und tragen, sofern erforderlich, gleichfalls Verbißschutzelemente 15. Diese Lamellen 13.1/Platten 16 sind entsprechend ihrer Verschwenkbarkeit nur quer zur Ebene der Trennwand 10 ablenkbar.

Die durch die vorstehend beschriebene Trennwand 10 wahlweise trennbaren Kammern 8, 9 besitzen in ihren seitlichen Wänden 2 Türen 17, so daß ein Zugang zu unterschiedlichen Zwecken gewährleistet ist. Insbesondere grenzt die seitliche Wand 2 der höheren Kammer 9 an einen längs der Stalleinheit 7 verlaufenden Gang 18 an, so daß unter Verwendung der jeder Kammer 9 zugeordneten gangseitigen Tür 17 die Kontrolle, Wartung, Reinigung, Lüftung u. dgl. jeder Stalleinheit 7 erfolgen kann. Dazu kann wahlweise die Trennwand 10 vollständig oder in Zwischenstellungen geöffnet oder (im Normalbetrieb) geschlossen werden. Dem entsprechend verfügt die Trennwand 10 (bzw. die Wickelrolle 11 bei den entsprechenden Ausführungsvarianten) über einen elektromotorischen Antrieb, der wahlweise manuell oder automatisiert steuerbar ist (nicht dargestellt).

Wie bekannt, verfügt jede Stalleinheit 7 des Stallgebäudes über zweckmäßig angeordnete Lüftungsöffnungen, um eine energiesparende freie Belüftung durch natürliche Luftströmung bei tierartgerechter Klimatisierung zu ermöglichen. Um dabei die Fortluftführung aus der niedrigeren Kammern 8 zu gewährleisten, ist oberhalb des oberen Endes der Trennwand 10 bzw. bei Vorhandensein einer Wickelrolle 11 über dieser eine beide Kammern 8, 9 verbindende Entlüftungsöffnung 19 vorgesehen.

Die Erfindung ist nicht durch Einzelheiten des vorstehenden Ausführungsbeispiels beschränkt. Insbesondere bestehen verschieden weitere Realisierungsmöglichkeiten einer nach oben beweg- und feststellbaren Trennwand 10.

## Patentansprüche

1. Stallgebäude für die Nutztierhaltung mit höhenversetztem Satteldach, bestehend aus einer Mehrzahl von modulartig an stirnseitigen Wänden aneinander gereihten Stalleinheiten aus je zwei Kammern, wobei die Kammern jeweils den unterschiedlich geneigten Dachabschnitten zugeordnet sind und jeweils eine parallel zum Dachfirst verlaufende Trennwand besitzen, die einen durch einen Vorhang verschließbaren Durchgang aufweist,
**dadurch gekennzeichnet, daß** die Trennwand (10) zwecks Öffnung vertikal beweg- und feststellbar ausgeführt ist und an ihrem unteren Ende einen Lamellenvorhang (13) aufweist, dessen senkrecht orientierte Lamellen (13.1) jeweils quer zu und/oder seitlich in der Ebene der Trennwand (10) ablenkbar sind.

2. Stallgebäude nach Anspruch 1, **dadurch gekennzeichnet, daß** die Trennwand (10) als auf eine waagerechte Wickelrolle (11) aufwickelbarer Vorhang (10.1) aus flexiblem Material ausgeführt ist, an dessen unterem Ende der Lamellenvorhang (13) angeordnet ist.

3. Stallgebäude nach Anspruch 1, **dadurch gekennzeichnet, daß** die Trennwand (10) als auf eine waagerechte Wickelrolle (11) aufwickelbarer, aus einzelnen starren und gegeneinander verschwenkbaren Elementen bestehender Rolloder Sektionalvorhang ausgeführt ist, an dessen unterem Ende der Lamellenvorhang (13) angeordnet ist.

4. Stallgebäude nach Anspruch 1, **dadurch gekennzeichnet, daß** die Trennwand (10) als aus einzelnen Elementen bestehende Jalousie ausgeführt ist, an deren unterem Ende der Lamellenvorhang (13) angeordnet ist.

5. Stallgebäude nach Anspruch 1 bis 4, **dadurch gekennzeichnet, daß** die Trennwand (10) jeweils seitlich in Führungsschienen (12) geführt ist.

6. Stallgebäude nach Anspruch 1, **dadurch gekennzeichnet, daß** die Trennwand (10) um eine waagerechte Achse insgesamt nach oben kipp- und feststellbar ausgeführt ist.

7. Stallgebäude nach Anspruch 1 und einem der folgenden Ansprüche, **dadurch gekennzeichnet, daß** der Lamellenvorhang (13) aus einzelnen flexiblen, als Streifen (14) ausgeführten Lamellen (13.1) besteht, welche jeweils am unteren Ende der Trennwand (10) befestigt sind.

8. Stallgebäude nach Anspruch 7, **dadurch gekennzeichnet, daß** die als Streifen (14) ausgeführten Lamellen (13.1) sich seitlich überdecken.

9. Stallgebäude nach Anspruch 1 und einem der folgenden Ansprüche 2 bis 6, **dadurch gekennzeichnet, daß** der Lamellenvorhang (13) aus einzelnen, als mehr oder weniger starre Platten (16) ausgeführten Lamellen (13.1) besteht, welche jeweils am unteren Ende der Trennwand (10) um eine waagerechte Achse verschwenkbar befestigt sind.

10. Stallgebäude nach Anspruch 1, 7 oder 9, **dadurch gekennzeichnet, daß** am unteren Ende der Lamellen (13.1) Verbißschutzelemente (15) angeordnet sind.

11. Stallgebäude nach Anspruch 1 und einem oder mehreren der folgenden Ansprüche, **dadurch gekennzeichnet, daß** oberhalb des oberen Endes der Trennwand (10) bzw. oberhalb der Wickelrolle (11) eine beide Kammern (8; 9) verbindende Entlüftungsöffnung (19) vorgesehen ist.

12. Stallgebäude nach Anspruch 1 bis 11, **dadurch gekennzeichnet, daß** die Trennwand (10) aus der Schließ- in die Offenstellung und zurück und in Zwischenstellungen durch einen Antrieb bewegbar ist, der manuell- oder motorbetätigbar ist.

13. Stallgebäude nach Anspruch 12, **dadurch gekennzeichnet, daß** der Antrieb manuell oder automatisch gesteuert ist.
